# EUROPEAN PATENT SPECIFICATION

(11) **EP 3 812 572 B1**
(45) Date of publication and mention of the grant of the patent: **18.05.2022**
(21) Application number: 20203442.7
(22) Date of filing: 22.10.2020
(51) Int. Cl.: F02M 37/00, F02M 55/04, F16L 11/11, F16L 11/112, F16L 11/12, F16L 55/04, B60K 15/01, B60K 15/04, F02M 37/10

(54) **NOISE REDUCTION FUEL TUBE FOR AUTOMOTIVE LIFT PUMP**
GERÄUSCHUNTERDRÜCKUNGS-KRAFTSTOFFROHR FÜR AUTOMATISCHE HEBEPUMPE
TUBE DE CARBURANT À RÉDUCTION DU BRUIT POUR POMPE DE LEVAGE AUTOMOBILE

(30) Priority: 22.10.2019 GB 201915240
(43) Date of publication of application: 28.04.2021
(73) Proprietor: Delphi Automotive Systems Luxembourg SA, 4940 Bascharage (LU)
(72) Inventor: PERINET, Jean-François, 54260 FRESNOIS-LA-MONTAGNE (FR); WOJCIK, Dane, 62940 Haillicourt (FR)
(74) Representative: Office Freylinger

(56) References cited:
- EP-A1- 2 412 964
- EP-A1- 2 832 570
- DE-A1-102009 011 266
- DE-A1-102018 103 493
- DE-C1- 4 330 855
- US-A1- 2004 060 547
- US-A1- 2013 334 810

## Description

### TECHNICAL FIELD

The present invention relates to a tube for conveying fuel in a vehicle fuel tank that enables to reduce the noise provoked by pressure pulsations generated by a pump of a fuel module of the vehicle.

### BACKGROUND OF THE INVENTION

It is known that in a motor vehicle, and notably in a motor vehicle being propelled by fossil fuels, the engine is supplied with fuel from an automotive fuel tank, and the automotive fuel tank is usually coupled with a fuel delivery module allowing the transport of fuel from the tank to the engine.

The fuel delivery module of the automotive fuel tank commonly comprises a displacement fuel pump for moving fuel from the tank to the engine, a fuel level sensor for measuring the available volume of fuel in the tank, and fuel tubes for conveying fuel inside the fuel tank.

When travelling along the fuel pump, the fuel is subjected to a pressure differential since it is moved from a low pressure side of the pump to a high pressure side of the pump. This difference of pressure provokes pressure pulsations in the fuel as well as in the fuel tubes of the fuel delivery module. These pressure pulsations generate noise that is disturbing for the users of the vehicle.

DE102009011266 discloses a conventional tube having a corrugated tube portion extending between straight ends.

### SUMMARY OF THE INVENTION

Accordingly, it is an object of the present invention to resolve the above-mentioned problem in providing a tube arranged for conveying fuel in a vehicle fuel delivery module as claimed in claim 1.

Thanks to the claimed arrangement, and in particular the reduced thickness of the first part, a fraction of the pressure pulsations generated by the difference of pressures in the fuel pump is absorbed by the longitudinal wall. Hence, the pressure pulsations are partially dampened.

Consequently, the generated noise is reduced, improving the comfort of the users of the vehicle.

In an embodiment of the tube, the at least one first part of the longitudinal wall of the tube presents a first diameter and the at least one second part of the longitudinal wall presents a second diameter, the first diameter being larger than the second diameter.

In an embodiment of the tube, the length of said central part is comprised in a range from 35% to 85% of the total length of the longitudinal wall, preferably from 45% to 75% of the total length of the longitudinal wall.

In an embodiment of the tube, the first thickness is comprised between 0.20 mm and 0.75 mm, preferably between 0.30 mm and 0.70 mm, and the second thickness is comprised between 0.9 mm and 1.20 mm, and preferably is equal to 1.15 mm.

In an embodiment of the tube, the longitudinal wall is made of PA11, PA12, PA6.12 or PA6.10.

The invention extends to a tube assembly comprising a tube as previously described and a shell, wherein the shell is fitted around the longitudinal wall of the tube.

In an embodiment of the tube assembly, the shell is mounted movably between a first position wherein the longitudinal wall of the tube is limited by the shell, and a second position wherein the tube is free.

In an embodiment of the tube assembly, the shell comprises two complementary pieces, said two complementary pieces being joined together by a mechanical fixation, preferably a snap-in type fixation.

The invention further extends to a vehicle fuel delivery module comprising a flange assembly and a body assembly, the body assembly comprising a tube as previously described, a fuel pump and a float arm connected to a float.

### BRIEF DESCRIPTION OF THE DRAWINGS

The present invention is now described by way of example with reference to the accompanying drawings in which:
Figure 1 is a perspective view of a fuel delivery module for a motor vehicle as per the present invention.
Figure 2 is a schematic lateral view of a tube assembly of the fuel delivery module of figure 1 as per a first embodiment of the present invention in an elongated state.
Figure 3 is a schematic lateral view of a tube assembly of the fuel delivery module of figure 1 as per a second embodiment of the present invention.
Figure 4 is a schematic lateral view of the tube assembly of figure 3 in a partially disassembled position.

### DESCRIPTION OF THE PREFERRED EMBODIMENTS

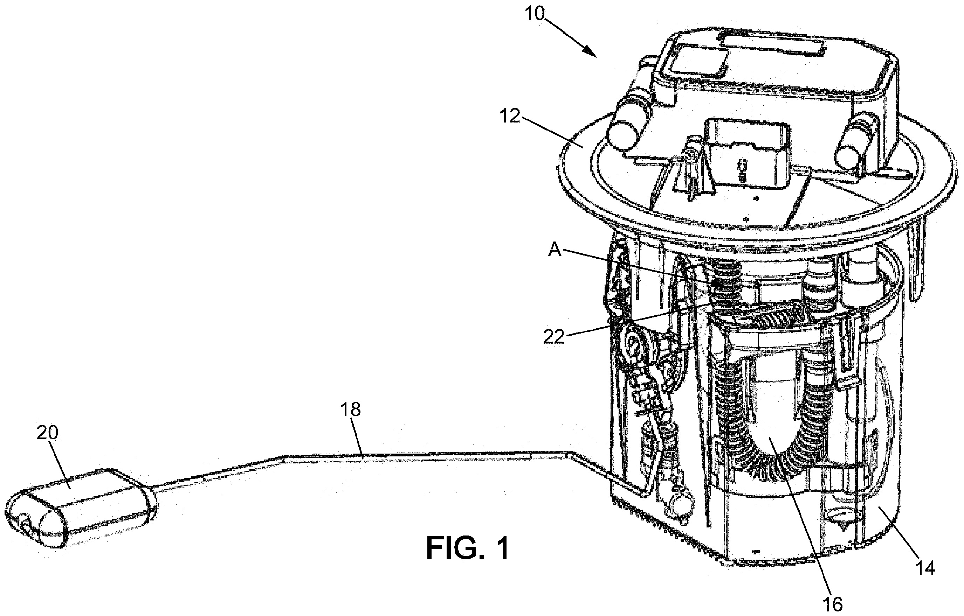

As shown in figure 1, a fuel delivery module 10 for motor vehicle typically comprises a flange assembly 12 and a body assembly 14. The flange assembly 12 is adapted to be mounted to a fuel tank, the body assembly 14 being inserted in the fuel tank.

The body assembly 14 is provided at least with a fuel pump 16 and a float arm 18. The float arm 18 extends outward from a lateral wall of the body assembly 14 and is connected to a float 20. The float 20 is provided with a fuel level sensor (not illustrated) for measuring the fuel volume in the tank.

The body assembly 14 further comprises a tube assembly A provided with at least one tube 22. The tube 22 is arranged for conveying fuel in the fuel delivery module 10. Preferably, the tube 22 is of a general cylindrical form with a circular section, but any other form of section is possible. A diameter of the tube 22 is preferably comprised in a range of 3 mm to 15 mm, and more preferably 5 mm to 10 mm.

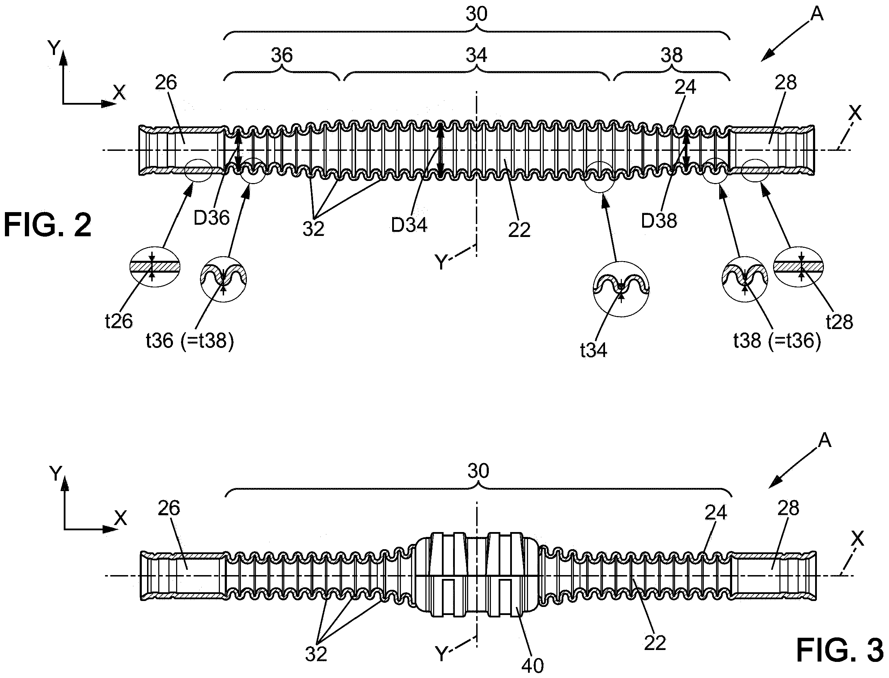

As can be seen from figures 2 to 4, the tube 22 comprises a longitudinal wall 24 extending along a longitudinal direction, named x-axis, in the illustrated elongated state. Preferably, the tube 22 is symmetric about the x-axis as well as about a y-axis, said y-axis being perpendicular to the x-axis. A length of the tube 22 in the x-axis preferably comprised between 30 mm and 600 mm, and more preferably between 50 mm and 500 mm.

Preferably, the tube 22 is manufactured by an extrusion process.

As also shown in figures 2 to 4, the longitudinal wall 24 comprises a first end 26, a second end 28 and an intermediate portion 30 extending between the first and the second ends 26, 28.

Preferably, the longitudinal wall 24 is made out of PA11, PA12, PA6.12 or PA6.10.

The first and the second ends 26, 28 are adapted to be assembled with other elements of the fuel delivery module 10. A thickness t26, t28 of the longitudinal wall 24 at the first and second ends 26, 28 is preferably comprised between 0.9 and 1.2 mm, and more preferably is equal to 1.15 mm.

The intermediate portion 30 is formed by a plurality of corrugations 32. The corrugations 32 allow the flexion of the tube 22.

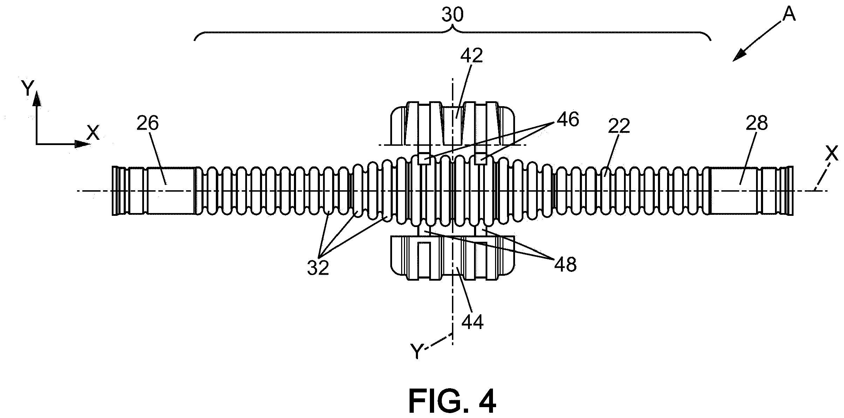

As particularly visible from figures 2 and 4, the intermediate portion 30 comprises a central part 34 and a first and second extremal parts 36, 38.

The length of the central part 34 is comprised in a range from 35% to 85% of the total length of the longitudinal wall 24, preferably from 45% to 75% of the total length of the longitudinal wall 24.

The first extremal part 36 extends between a first end of the central part 34 and the first end 26 of the tube 22. The second extremal part 38 extends between a second end of the central part 34 and the second end 28 of the tube 22. Each of the extremal parts 36, 38 includes preferably at least two corrugations 32.

As can be seen from figures 2 and 4, a thickness t34 of the longitudinal wall 24 at the central part 34 is thinner than a thickness t36, t38 at the extremal parts 36, 38. Advantageously, the thickness t36 of the first extremal part 36 is the same as the thickness t38 of the second extremal part 38. The thicknesses t36 and t38 are preferably equal to the thicknesses t26 and t28.

The thickness at the central part 34 being reduced, the tube 22 is softened at the central part 34. Thus, when a pressure pulsation is produced in the fuel that goes through the tube 22, the diameter of the tube 22 is able to expand, so the pressure pulsation is partly absorbed. Advantageously, the thicknesses t34, t36 and t38 remain constant despite the pressure pulsations.

As can also be seen from figures 2 and 4, a diameter D34 of the tube 22 at the central part 34 is larger than a diameter D36, D38 at the first and second extremal parts 36, 38. Advantageously, the diameter D36 of the first extremal part 36 is the same as the diameter D38 of the second extremal part 38.

The invention is now detailed in reference with the second embodiment.

In this second embodiment, the tube assembly A further comprises a shell 40, as shown in figures 3 and 4.

The shell 40 is fitted around the central part 34 of the tube 22.

The shell 40 is preferably made out of a polymer material.

As can be seen from figure 4, the shell 40 includes a first piece 42 and a second piece 44. The first and the second pieces 42, 44 are joined together by a mechanical fixation, preferably a snap-in type fixation, thanks to protuberances 46, 48 respectively of the first and second pieces 42, 44 adapted to penetrate into associated holes, respectively of the second and first pieces 44, 42.

The mechanical fixation between the first and the second pieces 42, 44 is preferably a removable fixation.

The shell 40 can be placed around the entire length of the central part 34 or only about a fraction of the central part 34. Preferably, the shell 40 covers a fraction of the central part 34 comprised in a range of 20% to 30% of the total length of the central part 34 of the tube 22.

The shell ensures an even greater reduction of the thickness of the central part 34.

Dimensions of the tube 22 are now given.

In the first embodiment, the thickness t34 of the central part 34 is preferably comprised between 0.40 mm and 0.75 mm, and more preferably between 0.50 mm and 0.70 mm.

In the second embodiment, the thickness t34 is preferably comprised between 0.20 mm and 0.75 mm, and more preferably between 0.30 mm and 0.60 mm.

In both embodiments, the thicknesses t36, t38 of the extremal parts 36, 38 is advantageously comprised between 0.90 and 1.20 mm, and more preferably is equal to 1.15 mm.

Thanks to the present invention, the pressure pulsations in the fuel going through the tube 22 are partially dampened. Also, the fact that the wall is thicker at the first and the second ends 26, 28 and at the extremal parts 36, 38 than at the central part 34 ensures that the tube can withstand the efforts generated at the interface between the tube and the elements to which the tube is connected. In particular, the tube is preferably adapted to withstand pressures comprised in a range of 1 bar to 20 bar.

Please note that the invention is not limited to the illustrated embodiments. In particular, it is possible that the thicknesses t36 and t38 decrease gradually from the first and second ends 26, 28 to the first and second ends of the central part 34. Furthermore, it is possible that the tube comprises several intermediate portions 30, each intermediate portion presenting a thickness thinner than that of the first and second ends 26, 28, the thicknesses of the intermediate portions differing one from another or being identical one to another.

### LIST OF REFERENCES

- A: tube assembly
- D34: diameter at the central part
- D36: diameter at the first extremal part
- D38: diameter at the second extremal part
- t26: thickness of the longitudinal wall at the first end
- t28: thickness of the longitudinal wall at the second end
- t34: thickness of the longitudinal wall at the central part
- t36: thickness of the longitudinal wall at the first extremal part
- t38: thickness of the longitudinal wall at the second extremal part

- 10: fuel delivery module
- 12: flange assembly
- 14: body assembly
- 16: fuel pump
- 18: float arm
- 20: float
- 22: tube
- 24: longitudinal wall
- 26: first end of the tube
- 28: second end of the tube
- 30: intermediate portion
- 32: corrugations
- 34: central part
- 36: first extremal part
- 38: second extremal part
- 40: shell
- 42: first piece of the shell
- 44: second piece of the shell
- 46: protuberance of the first piece of the shell
- 48: protuberance of the second piece of the shell

## Claims

1. A tube (22) arranged for conveying fuel in a vehicle fuel delivery module (10), comprising:
a first and a second ends (26, 28); and
a portion (30) extending between said first and second ends (26, 28), said portion (30) being delimited by a longitudinal wall (24) having a plurality of annular corrugations (32), the longitudinal wall (24) of the tube (22) comprising one first part, called central part (34), and two second parts, called extremal parts (36, 38), the extremal parts (36, 38) extending between an end of the central part (34) and the first or the second ends (26, 28) of the tube (22);
**characterized in that** the central part (34) presents a first thickness being thinner than a second thickness of the extremal parts such that the tube (22) is arranged to expand when fuel flows therein.

2. A tube (22) as per claim 1, wherein the at least one first part of the longitudinal wall (24) of the tube (22) presents a first diameter (D34) and the at least one second part of the longitudinal wall (24) presents a second diameter (D36, D38), the first diameter (D34) being larger than the second diameter.

3. A tube (22) as per claim 1 or 2, wherein the length of said central part (34) is comprised in a range from 35% to 85% of the total length of the longitudinal wall, preferably from 45% to 75% of the total length of the longitudinal wall.

4. A tube (22) as per anyone of the preceding claims, wherein the first thickness is comprised between 0.20 mm and 0.75 mm, preferably between 0.30 mm and 0.70 mm, and the second thickness is comprised between 0.9 mm and 1.20 mm, and preferably is equal to 1.15 mm.

5. A tube (22) as per anyone of the preceding claims, wherein the longitudinal wall (24) is made of PA11, PA12, PA6.12 or PA6.10.

6. A tube assembly (A) comprising a tube (22) as per anyone of the preceding claims and a shell (40), wherein the shell (40) is fitted around the longitudinal wall (24) of the tube (22).

7. A tube assembly (A) as per claim 6, wherein the shell (40) is mounted movably between a first position wherein the longitudinal wall (24) of the tube (22) is limited by the shell (40), and a second position wherein the tube (22) is free.

8. A tube assembly as per claims 6 or 7, wherein the shell (40) comprises two complementary pieces (42, 44), said two complementary pieces (42, 44) being joined together by a mechanical fixation, preferably a snap-in type fixation.

9. A vehicle fuel delivery module (10) comprising a flange assembly (12) and a body assembly (14), the body assembly (14) comprising a tube (22) as per anyone of claims 1 to 5, a fuel pump (16) and a float arm (18) connected to a float (20).

## Patentansprüche

1. Rohr (22), das zum Fördern von Kraftstoff in einem Fahrzeug-Kraftstoffabgabemodul (10) angeordnet ist, umfassend:
ein erstes und ein zweites Ende (26, 28) und
einen Abschnitt (30), der sich zwischen dem ersten und dem zweiten Ende (26, 28) erstreckt, wobei der Abschnitt (30) durch eine Längswand (24) mit einer Vielzahl von ringförmigen Rillen (32) begrenzt ist, wobei die Längswand (24) des Rohrs (22) einen ersten Teil, der als mittlerer Teil (34) bezeichnet wird, und zwei zweite Teile, die als extremale Teile (36, 38) bezeichnet werden, umfasst, wobei sich die extremalen Teile (36, 38) zwischen einem Ende des mittleren Teils (34) und dem ersten oder dem zweiten Ende (26, 28) des Rohrs (22) erstrecken;
**dadurch gekennzeichnet, dass** der mittlere Teil (34) eine erste Dicke aufweist, die dünner als die zweite Dicke der extremalen Teile ist, so dass das Rohr (22) so angeordnet ist, dass es sich ausdehnt, wenn Kraftstoff in diesem fließt.

2. Rohr (22) nach Anspruch 1, wobei der mindestens eine erste Teil der Längswand (24) des Rohrs (22) einen ersten Durchmesser (D34) aufweist und der mindestens eine zweite Teil der Längswand (24) einen zweiten Durchmesser (D36, D38) aufweist, wobei der erste Durchmesser (D34) größer als der zweite Durchmesser ist.

3. Rohr (22) nach Anspruch 1 oder 2, wobei die Länge des mittleren Teils (34) in einem Bereich von 35 % bis 85 % der Gesamtlänge der Längswand, vorzugsweise von 45 % bis 75 % der Gesamtlänge der Längswand, liegt.

4. Rohr (22) nach einem der vorhergehenden Ansprüche, wobei die erste Dicke zwischen 0,20 mm und 0,75 mm, vorzugsweise zwischen 0,30 mm und 0,70 mm, liegt und die zweite Dicke zwischen 0,9 mm und 1,20 mm liegt und vorzugsweise gleich 1,15 mm ist.

5. Rohr (22) nach einem der vorhergehenden Ansprüche, wobei die Längswand (24) aus PA11, PA12, PA6.12 oder PA6.10 gefertigt ist.

6. Rohraufbau (A), umfassend ein Rohr (22) nach einem der vorhergehenden Ansprüche und eine Ummantelung (40), wobei die Ummantelung (40) um die Längswand (24) des Rohrs (22) angebracht ist.

7. Rohraufbau (A) nach Anspruch 6, wobei die Ummantelung (40) beweglich zwischen einer ersten Position, in der die Längswand (24) des Rohrs (22) durch die Ummantelung (40) begrenzt ist, und einer zweiten Position, in der das Rohr (22) frei ist, montiert ist.

8. Rohraufbau nach Anspruch 6 oder 7, wobei die Ummantelung (40) zwei komplementäre Stücke (42, 44) umfasst, wobei die zwei komplementären Stücke (42, 44) durch eine mechanische Befestigung, vorzugsweise eine Einrastbefestigung, zusammengefügt sind.

9. Fahrzeug-Kraftstoffabgabemodul (10), umfassend einen Flanschaufbau (12) und einen Körperaufbau (14), wobei der Körperaufbau (14) ein Rohr (22) nach einem der Ansprüche 1 bis 5, eine Kraftstoffpumpe (16) und einen Schwimmerarm (18), der mit einem Schwimmer (20) verbunden ist, umfasst.

## Revendications

1. Tube (22) agencé pour acheminer du carburant dans un module de distribution de carburant de véhicule (10), comprenant :
des première et deuxième extrémités (26, 28) ; et
une partie (30) s'étendant entre lesdites première et deuxième extrémités (26, 28), ladite partie (30) étant délimitée par une paroi longitudinale (24) ayant une pluralité d'ondulations annulaires (32), la paroi longitudinale (24) du tube (22) comprenant une première partie, appelée partie centrale (34), et deux deuxièmes parties, appelées parties extrémales (36, 38), les parties extrémales (36, 38) s'étendant entre une extrémité de la partie centrale (34) et la première ou deuxième extrémité (26, 28) du tube (22) ;
**caractérisé en ce que** la partie centrale (34) présente une première épaisseur qui est plus fine qu'une deuxième épaisseur des parties extrémales de sorte que le tube (22) soit agencé pour se dilater lorsque le carburant s'écoule dans celui-ci.

2. Tube (22) selon la revendication 1, dans lequel l'au moins une première partie de la paroi longitudinale (24) du tube (22) présente un premier diamètre (D34) et l'au moins une deuxième partie de la paroi longitudinale (24) présente un deuxième diamètre (D36, D38), le premier diamètre (D34) étant supérieur au deuxième diamètre.

3. Tube (22) selon la revendication 1 ou 2, dans lequel la longueur de ladite partie centrale (34) est comprise dans une plage allant de 35% à 85% de la longueur totale de la paroi longitudinale, de préférence allant de 45% à 75% de la longueur totale de la paroi longitudinale.

4. Tube (22) selon l'une quelconque des revendications précédentes, dans lequel la première épaisseur est comprise entre 0,20 mm et 0,75 mm, de préférence entre 0,30 mm et 0,70 mm, et la deuxième épaisseur est comprise entre 0,9 mm et 1,20 mm, et est, de préférence, égale à 1,15 mm.

5. Tube (22) selon l'une quelconque des revendications précédentes, dans lequel la paroi longitudinale (24) est réalisée en PA11, PA12, PA6.12 ou PA6.10.

6. Ensemble tube (A) comprenant un tube (22) selon l'une quelconque des revendications précédentes et une enveloppe (40), dans lequel l'enveloppe (40) est ajustée autour de la paroi longitudinale (24) du tube (22).

7. Ensemble tube (A) selon la revendication 6, dans lequel l'enveloppe (40) est montée de manière mobile entre une première position dans laquelle la paroi longitudinale (24) du tube (22) est limitée par l'enveloppe (40), et une deuxième position dans laquelle le tube (22) est libre.

8. Ensemble tube selon la revendication 6 ou 7, dans lequel l'enveloppe (40) comprend deux pièces complémentaires (42, 44), lesdites deux pièces complémentaires (42, 44) étant assemblées par une fixation mécanique, de préférence une fixation de type à encliquetage.

9. Module de distribution de carburant de véhicule (10) comprenant un ensemble bride (12) et un ensemble corps (14), l'ensemble corps (14) comprenant un tube (22) selon l'une quelconque des revendications 1 à 5, une pompe à carburant (16) et un bras de flotteur (18) relié à un flotteur (20).
